# EUROPEAN PATENT SPECIFICATION

(11) **EP 2 030 269 B1**
(45) Date of publication and mention of the grant of the patent: **19.03.2014**
(21) Application number: 07797450.9
(22) Date of filing: 14.05.2007
(51) Int. Cl.: H01M 4/04, H01M 4/139, H01M 2/26

(54) **APPARATUS AND METHOD FOR PROCESSING A COATED SHEET**
VORRICHTUNG UND VERFAHREN ZUM VERARBEITEN EINES BESCHICHTETEN BLATTES
APPAREIL ET PROCEDE PERMETTANT DE TRAITER UNE FEUILLE REVETUE

(30) Priority: 12.05.2006 US 799894 P
(43) Date of publication of application: 04.03.2009
(73) Proprietor: A123 Systems, Inc., Watertown, MA 02472 (US)
(72) Inventor: GOZDZ, Antoni, S., Marlborough, MA 01752 (US); MARTIN, Charles, E., Georgetown, MA 01833 (US); RILEY, Gilbert, N., Jr., Marlborough, MA 01752 (US)
(74) Representative: Chapman, Paul William
(86) International application number: PCT/US2007/068871
(87) International publication number: WO 2007/134284

(56) References cited:
- EP-A1- 0 924 783
- JP-A- 8 138 655
- JP-A- 2003 068 271
- US-A- 4 288 269
- US-A- 5 314 544
- US-A- 6 162 264
- US-B1- 6 723 950

## Description

### Technical Field

The present disclosure relates to construction of electrochemical storage units (batteries). In particular, the disclosure relates to apparatus and methods for preparing electrode sheets for use in assembling batteries.

### Background

Devices for storing and providing electrical power have been in use for a long time. Generally falling under the descriptor "battery," such devices include electrochemical cells and collections of cells that provide an electrical potential between at least a set of terminals. The terminals can be connected to an electrical (*e.g.*, direct current, DC) load to energize or power the load. Batteries include dry cells, wet cells (*e.g.*, lead-acid cells), and other types of units that generally convert a chemically available electromotive force into a current.

Batteries are sometimes classified into "primary" and "secondary" types. Primary batteries are single-use units that come from a manufacturer with a limited electrochemical capacity and are exhausted and discarded after use (*see, e.g.,* Handbook of Batteries, David Linden and Thomas Reddy, Eds., McGraw-Hill Professional Publishing, 2001). Secondary batteries can be "recharged" after use, allowing for repeated use of the same cell through reversing the discharge process to some extent.

To increase battery discharge rate, cells have been configured to take advantage of a large surface area between the anode (negative) and cathode (positive) elements of the cells. One such design involves placing many parallel plates in electrolyte solution to allow for ionic transfer between the anodes and cathodes. Another design separates planar layered sheets of anode and cathode materials with porous membranes, then rolls the layers into a roll, referred to as a "jelly roll" that provides a compact and mechanically stable battery. In rolled battery designs, multiple alternating sheets of anode, separator, cathode and again separator, materials are used as permitted by the spatial considerations of the battery, and the anode sheets are collectively connected to an anode terminal while the cathode sheets are collectively connected to a cathode terminal. The device may be rolled cylindrically or in other geometries, known as prismatic configurations.

The entire device is packaged in a rigid enclosure, usually a cylindrical or prismatic (rectangular) can. The anode and cathode materials and terminals are prevented from making electronic contact to avoid short-circuiting or discharging the battery except through the intended terminals through an electrical load connected thereto.

EP 0924783 teaches a process for removing active materials from three-dimensional porous electrodes using heat and ultrasonic vibration. JP 2003068271 teaches that the electrode active material can be removed by using an ultrasonic horn, a heat plate, or a solvent method.

The present invention is set out in the independent claims, with some optional features set out in the claims dependent thereto.

### Summary

Apparatus and methods are provided for use in constructing an electrochemical storage device. Improved equipment and methods are provided for connecting conducting tabs to a coated electrode sheet that includes a substrate and an electrode layer on one or both sides of the substrate. Electrode material is removed from selected areas of the substrate to allow for the attachment of tabs. In one or more embodiments, improvements are provided in the quality of exposed substrate after removal of the coating material, and the speed and ease by which material is removed, by applying heat to the coated sheet while exposing the electrode material to solvent. A significant reduction in the amount of time required to complete the removal process is observed. In preparing an electrochemical storage device, the method and apparatus according to one or more embodiments are useful for treating the anode, the cathode, or both.

One aspect provides an apparatus for selectively removing portions of a coated sheet. The apparatus includes a heating station having a heated surface for receiving a coated electrode sheet. A solvent applicator is positioned to deliver solvent to one or more selected portions of a coated electrode sheet. A scraper is positioned to contact a coated electrode sheet and remove electrode coating from portions of the coated electrode sheet exposed to heat and solvent.

In certain embodiments, the solvent applicator includes a liquid pump and a solvent absorbent wick or pad, or a spray dispenser or roller. In some instances, the scraper includes a blade or brush. In some embodiments, the heated surface is a plate secured to a base. In some instances, a cartridge heater is housed in the body of the base. In some instances, the apparatus also includes a temperature control circuit. In certain embodiments, the apparatus includes a thermocouple, for example, positioned adjacent to the heated surface. In some embodiments, the apparatus also includes an uptake spool positioned to take up a scraped coated sheet at an exit end of the apparatus. In certain embodiments, the apparatus includes a tab applicator positioned to attach conductive tabs to scraped portions of the coated sheet. In some instances, the tab applicator includes a welder.

Another aspect provides a method for selectively removing portions of a coated sheet. The method includes providing a coated sheet including a conductive substrate and an electrode layer. Heat is applied to a region of the coated sheet, and solvent is applied to one or more selected portions of the electrode layer in a region of the coated sheet that is heated. Solvent is applied before, after, or simultaneously with heating. The solvent-exposed portions of the electrode layer are removed to expose the underlying conductive substrate.

In some embodiments, a region of the coated sheet is heated to a temperature of about 100°C or greater. In certain embodiments, the solvent is heated. In some instances, the solvent is applied from a solvent-saturated wick or pad, which is optionally heated to a temperature of about 100°C or greater. In some instances, the solvent is applied by spraying or rolling. In certain embodiments, a dwell time is established during which the heat and solvent fluxes flow in opposite directions. For example, the dwell time is from about 0.1 second to about 5 seconds. In certain embodiments, the electrode layer contains a binder and the solvent dissolves or swells the binder. In some embodiments, the solvent-exposed portion of the electrode layer is removed by mechanical abrasion, for example, by brushing or scraping. In some instances, the method further includes attaching a conductive tab to the exposed conductive substrate, for example, by welding (e.g., resistive or ultrasonic welding), riveting or crimping. In some embodiments, the processed coated sheet is wound onto a spool.

### Brief Description of the Drawings

The following drawings are for the purpose of illustration only, and are not intended to be limiting.
Figure 1 illustrates a rolled electrochemical storage device.
Figure 2 illustrates one end of the rolled device of Figure 1 with multiple tabs extending therefrom.
Figure 3 is a perspective drawing of a heating assembly according to one or more embodiments.
Figure 4 is a schematic of an apparatus for selectively removing coating from a coated electrode sheet according to one or more embodiments.
Figures 5A-B are perspective drawings of an apparatus for selectively removing coating from a coated electrode sheet according to one or more embodiments.
Figure 6 illustrates a system for winding the device of Figures 1 and 2.

### Detailed Description

As mentioned previously, batteries have been formed by co-winding layers of active material (anode, cathode) and separating membrane layers in various geometries as called for by the application at hand. Some are rolled into cylindrical shapes, while others have rectangular or other shaped cross-sections, and are said to have "prismatic" configurations. As described in more detail below, some batteries employ conductive tabs that extend from each electrode layer to form terminals and connect to external connectors and battery housing.

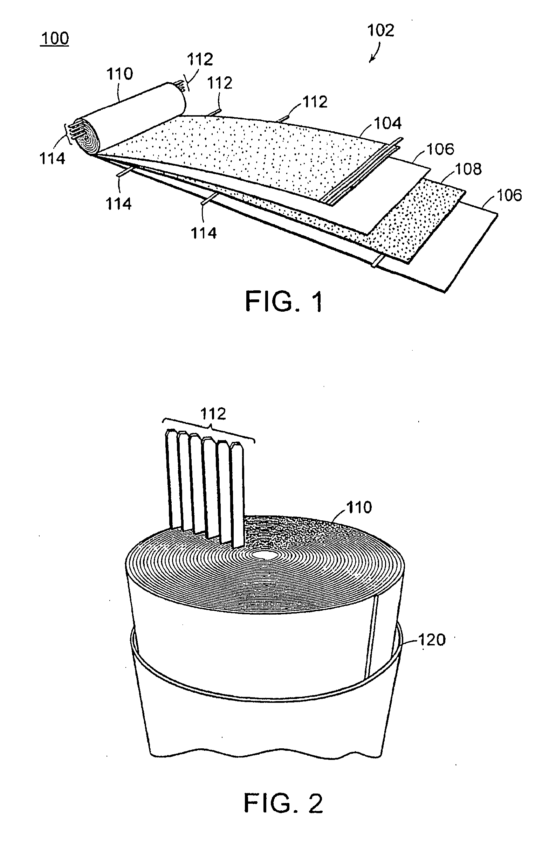

Figure 1 shows part of a battery device **100.** Strips or sheets of anode **104** and cathode **108** are separated by separator membranes **106.** The illustrated embodiment includes one anode layer **104** and one cathode layer **108,** but alternative embodiments include multiple such layers. The composition of anode **104** and cathode **108** depend on the specific type of battery, and include a layer of an electroactive material on an electrically conductive substrate. The electroactive material layer typically includes a binder and, optionally, additional conductive materials known in the art, *e.g.,* carbon. In one or more embodiments, the substrate serves as a current collector. Non-limiting examples of suitable substrates include aluminum, stainless steel, titanium, graphitic fiber, and other electrically conductive current collector sheet materials that are electrochemically stable at the electrode potential.

Each cathode **108** includes cathode conducting tabs **114,** *e.g.,* made of aluminum, that extend from the cathode **108.** Cathode **108** comprises a layer of electroactive material disposed on an electrically conductive substrate, *e.g.,* a current collector. In one or more embodiments, materials conventionally used in forming a cathode layer of a Li-ion battery are used. Non-limiting examples of electroactive cathode materials for Li-ion batteries include LiCoO₂, LiMn₂O₄, LiNi_{0.2}Co_{0.8}O₂, LiFePO₄, LiNi_{0.33}Co_{0.33}Mn_{0.34}O₂, and (Li,Nb)(Fe,Mn)PO₄. In certain embodiments, LiFePO₄ is used as a cathode electroactive material.

Anode **104** comprises a layer of electroactive material disposed on an electrically conductive substrate, *e.g.,* a current collector. Suitable anode materials include, without limitation, materials conventionally used in forming an anode layer of a Li-ion battery. Non-limiting examples of useful anode materials include natural or synthetic graphite, hard carbon, coke, Li titanate spinel, metal, and other materials. Each anode **104** includes anode conducting tabs **112** that extend from the anode **104.** The anode tabs 112, *e.g.,* made of copper, are conductive and provide for electrical and thermal coupling to anode **104.** The anode conducting tabs **112** and cathode conducting tabs **114** are at opposite ends of the battery apparatus **100**. The separator membranes **106** are porous and allow ions to be transported between the anode **104** and cathode **108,** but are electrically insulating and serve to insulate the two electrodes from one another.

Device **100** is formed by co-winding ribbon-shaped materials **102** into a "jelly roll" **110.** To provide electrical connections to the battery terminals, the multiple conducting tabs **112, 114** are inserted by welding or other connections at carefully selected intervals within the structure, *e.g.,* before it is rolled up. In certain embodiments, ultrasonic welding or laser welding is employed. In some embodiments, riveting or crimping is used to connect the tabs. Figure 2 illustrates an anode portion of a device, showing a group of collector tabs **112** extending from the rolled portion **110** of a battery device. A "can" **120,** *e.g.*, made of conventional materials such as aluminum or steel, houses the entire jelly roll assembly and provides the assembly with mechanical protection, prevents contamination, acts as a heat sink, and provides an electrode terminal (not shown). In operation, the first set of tabs **112** contacting the anode material **104,** and extending outward from the rolled portion **110** on one end thereof, collectively form the anode terminal of the battery device. The second set of tabs **114** contacting the cathode material **108** and extending outward from the rolled portion **110** on another end thereof, collectively form the cathode terminal of the battery device. In certain embodiments, conducting metal tabs of the same polarity are gathered together and attached to external connectors of the battery and to the flat bottom of the external metal can **120** by riveting, crimping, securing with threaded screws or laser or resistance welding. Electrolyte fluid or gel is introduced into the interior volume of the battery using known techniques, *e.g.,* before sealing the can **120** or via a port in can **120** that is plugged after sufficient filling.

In order to form the tabbed anode **104** and/or cathode **108,** portions of the electroactive material layer are removed from an edge of the electrode to create a clean surface for electrical contact where each tab is to be attached. Removal of the electrode material enables the secure and intimate attachment of conductive tabs to an electrically conductive substrate, through which electrical current generated by the chemical reactions within the battery is conducted. The tabs are electrically connected, *e.g.,* by electrical, laser or ultrasonic welding, riveting, crimping, or other similar technique, to exposed portions of the substrate, *e.g.,* current collector.

Several methods are available for preparing coated electrode sheets **104, 108** for the attachment of electrode conducting tabs **112, 114.** Known methods of producing coating-free substrate for purpose of tab attachment include (1) "interrupted coating," whereby an area of the substrate is intentionally left clear (uncoated) during the coating process, and (2) selectively removing coated material from the substrate by abrasive means (with or without the aid of a solvent). Such methods are unsatisfactory for a variety of reasons. Interrupted coating is an effective means of leaving the substrate void of coating for tab attachment, but is inflexible to changes in tab location, and generally results in a coating-free area that extends across the entire width of the conductive substrate sheet, having a negative effect on the electrode capacity. In addition, the number of tabs that can be attached is limited without making a substantial impact on cell capacity. Selective removal is flexible, but abrasive methods can be time consuming and subject to varying degrees of quality. It is especially difficult to obtain suitable quality using typical scraping methods when removing tightly adhered electrode material from thin foils, particularly when the electrode material is coated on both sides of the foil, which may also be pretreated with electrically conductive adhesion-enhancing coatings.

In contrast, apparatus and methods according to one or more embodiments herein provide rapid and good quality removal of electrode material even from a very thin foil, *e.g.,* copper or aluminum about 10-20 microns thick, with electrode material tightly adhered to both sides. In one or more embodiments, the quality of the exposed substrate after removal of the electrode layer, and the speed and ease with which material is removed from the substrate, are improved by applying heat to the coated sheet while exposing the electrode material to solvent. The application of heat, *e.g.*, using a heated base, significantly reduces the time required for solvent to detach electrode material from the substrate, when compared to a room temperature process. An additional advantage observed in at least some instances is an almost mirror-like cleanliness of the substrate *(e.g.,* foil) after electrode material removal. The electrode material appears to essentially peel away from the substrate with little resistance. In addition, the heat aids in fast evaporation of residual solvent. Significant gains in throughput processing rates also have been demonstrated. For example, using a process and apparatus with a heated base according to certain embodiments improved speed of assembly of tabbed electrodes by at least 40% compared to a similar unheated or room temperature process and apparatus, achieving a throughput of 7 parts *(i.e.,* 4-tab electrodes) per minute.

In one or more embodiments, heat is applied to the coated sheet from a heat source. In at least some embodiments, the heat source is contacted with the sheet. In certain embodiments, the heat source is applied to the substrate side of the coated sheet. The heat source is, for example, a heated base or plate. In some alternative embodiments, radiative heat or laser beam preheating also is contemplated. According to one or more embodiments, a base plate is heated to temperatures greater than about 60°C, for example, about 100°C or greater, about 110°C or greater, or about 120°C or greater. A coated electrode sheet is positioned with the portion of the sheet in which the electrode layer is to be removed (and then tabs applied) over the heated surface. In one embodiment, a heated base includes a cartridge heater and a thermocouple to provide the heat and feedback needed to control the base temperature. In the event of a thermocouple break or disconnect, the output relays to the cartridge heater can be turned off, eliminating the chance of uncontrolled runaway heating. The heater is insulated from surrounding support structure, for example, using a machinable ceramic material.

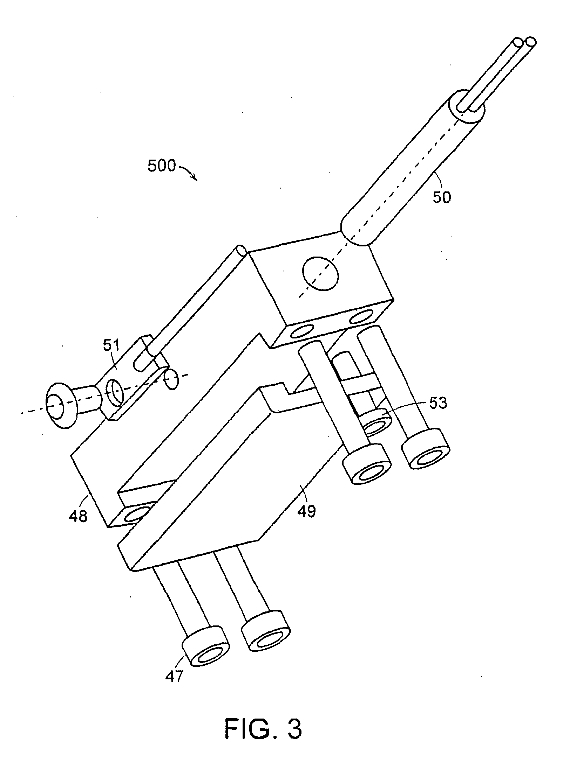

In one or more embodiments, a heating station 500 is employed as illustrated in a perspective drawing in Figure 3. The heater includes a base **48,** which is secured using mounts **47.** Plate **49** is secured to base **48** by setscrews **53.** Base **48** and plate **49** are heated by cartridge heater **50,** which is inserted into the body of base **48.** An optional thermocouple **51** is shown, which can be mounted adjacent to block **48.** The thermocouple maintains the temperature of the base and plate to a preset temperature. An associated control circuit ensures temperature control and helps prevent overheating. In use, a coated electrode sheet is passed over the exposed and heated surface of plate **49.** The sheet is advanced to and pauses at position with a portion of the sheet from which the electrode layer is to be removed above the heated surface of plate **49.** Once treated, the sheet is advanced again so that a subsequent portion of the sheet can be treated.

It has been observed that in most instances heat alone is not fully effective in facilitating removal of the electrode coating from a substrate. According to certain observations, a coated substrate left over a heated base for an extended period *(i.e.,* about one hour) showed no appreciable reduction in coating adhesion. Therefore, to facilitate selective coating removal, solvent typically is applied to the electrode material coating in the heated area. In at least some instances, the shape of the solvent applicator imparts the size and shape of the coating area to be removed.

In certain embodiments, a solvent distribution system administers solvent to the electrode sheet surface in the area in which electrode material is to be removed. The amount of solvent applied is sufficient to remove the desired area of electrode material, and can be estimated, *e.g.*, by taking into account the area to be cleaned and the electrode porosity, and typically including some solvent excess. Non-limiting examples of suitable methods for applying solvent include any appropriate method known in the art, for example, spraying, pumping, or application from a solvent-saturated pad. In some instances, an electrode sheet is pressed into contact with a heated base using a solvent applicator, for example, a non-woven or felt pad. In certain embodiments, solvent is applied to a pad incrementally, for example, using a mechanical pump. For example, solvent is applied using a constant displacement pump, in which a constant volume of fluid is delivered by displacing a predetermined volume within a pump chamber. The solvent is delivered, for example, to a solvent absorbable substrate, such as a wick or a pad, having the appropriate size and shape of the electrode coating area to be removed. The wick or pad makes contact with the electrode surface for a predetermined dwell time. In some embodiments, a set volume of solvent is pumped from a reservoir, using small diameter tubing, to a pad prior to each application, to promote transfer of a consistent amount to the electrode. In various alternative embodiments, an electrode sheet is contacted to a heat source and a solvent is applied by spraying, dripping, rolling or other applicator methods. In some embodiments, the solvent is also heated, for example, using a heated pad saturated with solvent in conjunction with a heated base. In certain embodiments, *e.g.*, when the substrate has a low heat conductivity, a solvent-saturated pad is heated to a temperature of about 100°C or greater, for example, using an electric heater or heated fluid exchanger.

The solvent loosens the coating from the substrate, *e.g.*, by causing swelling or dissolving the binder in the electrode coating. In one or more embodiments, the electrode layer includes one or more powdered active materials, one or more electrically conductive additives, such as high-specific surface area carbons, and a polymeric binder material. Non-limiting examples of suitable binders include poly(vinylidene difluoride) (PVDF) homo-, co- and terpolymers, styrene-butadiene rubber (SBR) emulsions with cellulose materials, such as carboxymethylcellulose (CMC), poly(ethylene oxide) homo-, co- and terpolymers, and the like. Suitable solvents are those capable of dissolving or swelling the electrode layer. In some instances, the solvent has good solubility for the electrode coating and is, for example, an aprotic polar solvent. In one or more embodiments, the solvent used is a strong swelling solvent or a good solvent of the polymeric binder material. In some instances, the solvent has a boiling point that is substantially greater than the temperature generated by the heated base employed, in order to reduce volatilization of the solvent (and increase safety). In some instances, the solvent has low viscosity to increase solvent flux. Non-limiting examples of suitable solvents include N-methylpyrrolidinone (NMP) (b.p. 202-204°C), which can be safely heated up to about 130-160°C, morpholine N-oxide (MNO), gamma-butyrolactone (γ-BL), dimethyl sulfoxide (DMSO), dimethylformamide (DMF), and poly(vinylidene difluoride) (PVDF) or its copolymers and terpolymers. By way of example, NMP and γ-BL are useful solvents when a PVDF binder is employed. In another example, water is used as a swelling or solubilizing agent, for example, when a water-soluble binder mixture is employed, such as a blend of carboxymethylcellulose (CMC) and styrene-butadiene rubber (SBR) emulsion. Xylene and toluene are further examples of useful solvents for a SBR-CMC binder.

In one or more embodiments, a dwell time is established during which the heat and solvent fluxes flow in opposite directions, promoting more complete and faster swelling and detachment of portions of the electrode layer from the substrate/electrode interface. For example, when solvent is applied from a pad to the top porous surface of an electrode layer, it must flow/penetrate through the porous electrode layer towards the substrate. However, when the heated base is on the other side of the coated sheet, heat flux is from the base towards the solvent saturated pad, so the two fluxes (heat and solvent) are counter-current. Thus, the hottest part of the electrode layer saturated with the solvent is on the substrate/electrode interface, where the solvent concentration may be the lowest. However, the increased temperature in this region tends to make the swelling of the binder with a limited amount of solvent more effective than at the open, top surface. Dwell time varies depending on the thickness and the density of the electrode coating and the coating composition. In some embodiments, dwell times range between about 0.1 second and about 5 seconds, for example, between about 1 second and about 3 seconds, or between about 1 second and about 1.5 seconds.

In some alternative embodiments, solvent is applied as described above to an unheated coated electrode. While this softens the electrode coating and permits its selective removal, longer dwell time with the solvent typically is required. In some instances, the dwell time is about 40% or more longer than when heating is used. In some cases the heating process is used for one electrode, *e.g.,* the cathode, but not the other.

Following exposure to solvent and/or heat, the swollen and/or softened electrode material is removed from the treated surface, *e.g.,* by mechanical means. In one or more embodiments, the treated electrode sheet is advanced to an electrode layer removal scraping station, which includes a device capable of removing the undesired material. A "scraper" as used herein broadly refers to a device for removing material by mechanical means, *e.g.,* a blade or brush. An exemplary device includes a sharpened strip, *e.g.,* a sharpened metal strip or edge blade, that is drawn across the surface of the electrode material. As a non-limiting example, the device is a steel strip with a sharpened edge, *e.g.,* a 1/16" strip with a 45° double-sided bevel. In some instances, the strip is attached and positioned via mechanical actuators. For example, a motor lowers the scraper to the electrode material surface and moves it across the surface. In one or more embodiments, the scraper moves from one edge of the electrode sheet toward the other, drawing loosened material with it until the loosened material drops off the edge of the sheet. In some embodiments, a vacuum pickup is employed to capture the loosened material and reduce particulate contamination.

In some embodiments the electrode sheet being treated includes a layer of electroactive material on both its upper and lower surfaces. In such cases, one surface of the coated electrode is treated, and then the sheet is reintroduced into the heating and scraping stations to treat the other surface.

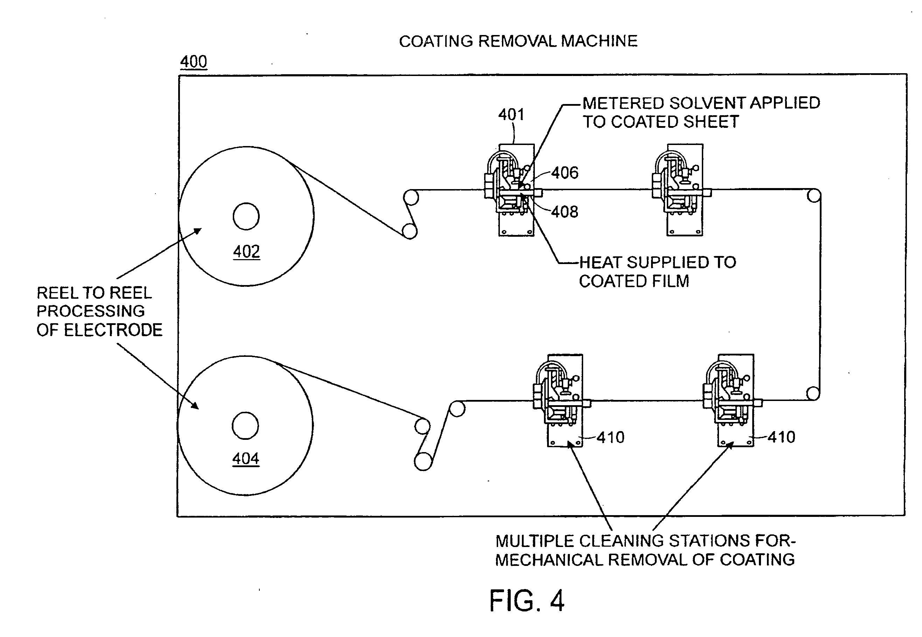

Figure 4 illustrates an apparatus **400** for removing electrode coating from selected portions of a coated electrode sheet according to one or more embodiments. A coated sheet is processed from one reel **402** onto another reel **404.** Between the reels **402, 404,** the sheet passes through a station **401** including a solvent applicator **406** and a heated based **408,** which apply solvent and heat, respectively, to selected portions of the coated sheet. The sheet then advances to multiple cleaning stations **410** where electrode coating material is mechanically removed from the selected portions of the sheet that have been treated with heat and solvent. Following cleaning, the sheet is taken up onto reel **404.**

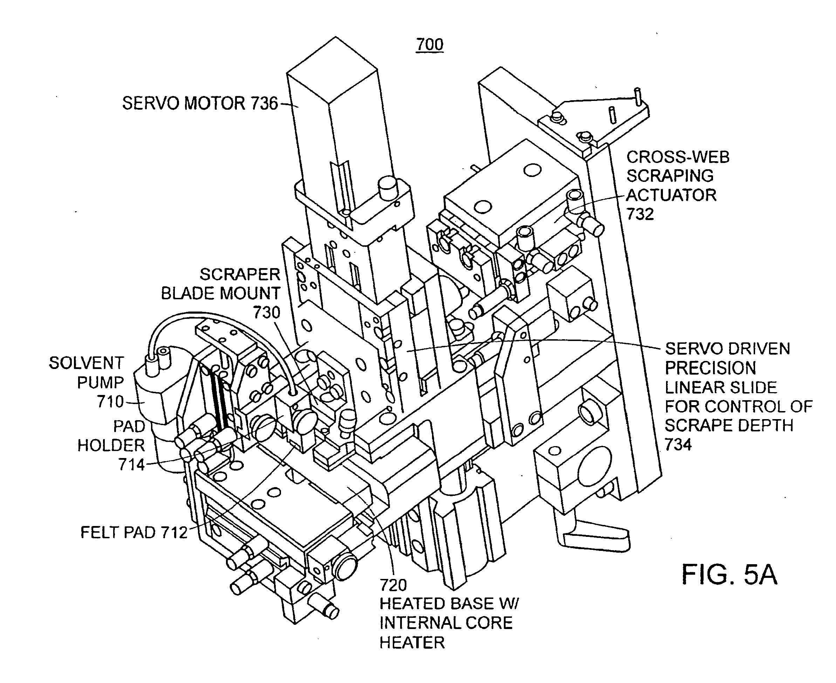

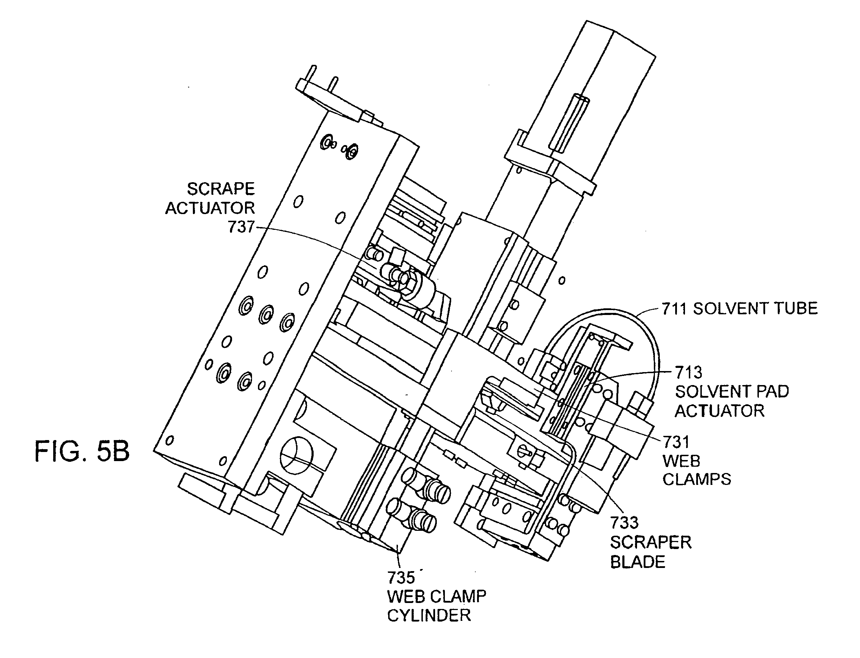

Figure 5A illustrates an apparatus **700** for removing electrode coating from selected portions of a coated electrode sheet according to one or more embodiments. The apparatus includes a solvent applicator system including a solvent pump **710** for supplying solvent, a felt pad **712** for applying solvent to selected portions of a coated electrode sheet, and a pad holder **714.** A heated base **720** with internal core heater is used to apply heat to regions of the coated electrode sheet. Also shown is a scraping assembly for removing selected portions of the electrode coating exposed to heat and solvent. The scraping assembly includes a scraper blade mount **730,** a cross-web scraping actuator **732,** and a precision linear slide **734** for controlling scrape depth, which is driven by servo motor **736.** Figure 5B provides additional detail, showing a solvent tube **711** for delivering solvent, solvent pad actuator **713,** web clamps **731,** scraper blade **733** for removing solvent- and heat-exposed electrode material, web clamp cylinder **735,** and scrape actuator **737.**

Following removal of electrode material in the desired areas of a coated electrode sheet, collecting tabs are attached to the clean exposed surface of the underlying substrate. In some embodiments, the cleaned and scraped electrode sheet is taken up on a spool, from which it is processed to attach the tabs. In some instances the spool is a removable spool mounted on a spindle on the apparatus for preparing the coated electrode sheet. Non-limiting examples of suitable methods for attaching the tabs include conventional methods, such as welding *(e.g.,* ultrasonic welding or laser welding), riveting and crimping. A clean foil substrate promotes good ultrasonic welding. The tabbed electrode sheets are assembled into an electrochemical storage device, *e.g.,* as illustrated in Figures 1 and 2.

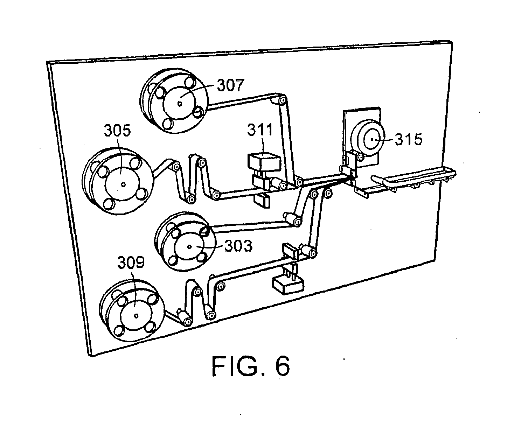

Figure 6 illustrates an exemplary apparatus and method for assembling a rolled battery device as described herein. Spools **303** and **307** hold separator membrane sheet material **106.** Spool **305** holds tabbed anode electrode sheet material **104,** and spool **309** holds tabbed cathode electrode sheet material **108.** Sheet materials **106, 108** and **104** are collected at station **311.** The sheets, including the tabbed electrode substrates, are co-wound onto spool **315.** In one or more embodiments, other processing apparatus and/or steps known in the art are added as desired to complete the manufacture of rolled portion **110** of a battery.

In assembling a device, co-winding the sheets broadly encompasses a process in which one or more layers of sheet or sheet-like materials are wound together onto a spool or about one another to result in a spiral configuration of each material, within which the other materials are interspersed. The exact final outcome is not necessarily cylindrical in shape. Being coiled, rolled, or wound about an axis does not require that the layers form precise circular layers about the axis. Other rolling or stacking structures, for example, prismatic cross-sectional configurations, are contemplated. In some embodiments the roll forms an increasing-radius spiral rather than constant-radius circular rings.

While traditional battery designs generally struggle to provide high power applications with the desired results, certain battery designs using tabbed coated electrodes made as described herein allow for a reduced impedance design that provides improved electrical characteristics for high power and high current applications. Lower resistance of the battery cell internals and endcaps also reduces heat generation and dissipation from the battery. See, *e.g.*, co-pending U.S. Patent Application Serial No. 11/515,597, filed September 5, 2006, entitled "Battery Cell Design and Method of its Construction."

As a non-limiting example, a Li-ion cell with a LiFePO₄/graphite chemistry is formulated for high power. The electrodes are fabricated using conventional processes to coat both sides of a current collector with electroactive material. For example, the thickness of the two-sided cathode and anode are 200 microns and 100 microns, respectively. The thickness of the anode and cathode current collectors are about 10-20 microns. The thickness of the separator is about 25 microns. Conductive tabs of aluminum and copper have dimensions (cross section) of about 0.1 mm x 4 mm and 0.015 mm x 5 mm, respectively, and are spaced apart from each other along the edge of the anode and cathode, respectively. The tabs are attached following selective removal of electrode material from the current collector using methods and apparatus as described herein. Laser welding is used to join the conductive tabs to the anode and cathode current collectors. The sheets are wound concentrically into a rolled battery configuration, such as an "18650" or "26650" cell size. The length of the cathode and anode in an 18650 cell type are about 55 cm and about 61 cm, respectively. The length of the cathode and anode in a 26650 cell type are about 150 cm and about 156 cm, respectively. Copper and aluminum strap (8 mm x 0.1 mm x 2.0 cm) are used to join the jelly roll to a steel can and header, respectively.

Upon review of the present description, those skilled in the art will recognize useful modifications and equivalent substitutions of various aspects of the present disclosure without departing from the scope of the invention, which is not limited to the specific embodiments disclosed above.

## Claims

1. A method for selectively removing portions of a coated sheet, the method comprising:
(a) heating a region of a coated sheet, the sheet comprising a conductive substrate and an electrode layer;
(b) applying solvent to one or more selected portions of the electrode layer in a region of the coated sheet that is heated, wherein solvent is applied
simultaneously with heating, and a dwell time is established during which the heat and solvent fluxes flow in opposite directions; and
(c) removing the solvent-exposed portions of the electrode layer to expose the underlying conductive substrate.

2. The method of claim 1, wherein the solvent is applied from a solvent-saturated wick or pad, or by spraying or rolling.

3. The method of claims 1 and 2, wherein the solvent is heated.

4. The method of claims 1, 2 and 3, wherein a region of the coated sheet, the solvent or the solvent-saturated wick or pad is heated to a temperature of about 100°C or greater.

5. The method of claims 1 through 4, wherein the dwell time is from about 0.1 sec to about 5 seconds.

6. The method of claims 1 through 5, wherein the solvent-exposed portion of the electrode layer is removed by mechanical abrasion and the mechanical abrasion comprises brushing or scraping.

7. The method of claims 1 through 6, further comprising winding the coated sheet onto a spool.

8. The method of claims 1 through 7, further comprising attaching a conductive tab to the exposed conductive substrate.

## Patentansprüche

1. Verfahren zum selektiven Entfernen von Teilen von einer beschichteten Platte, wobei das Verfahren umfasst:
(a) Erwärmen eines Bereiches einer beschichteten Platte, wobei die Platte ein leitendes Substrat und eine Elektrodenschicht aufweist;
(b) Aufbringen von Lösungsmittel auf einen oder mehrere ausgewählte Teile der Elektrodenschicht in einem Bereich der beschichteten Platte, der erwärmt wird, wobei das Lösungsmittel gleichzeitig mit dem Erwärmen aufgebracht wird und eine Verweildauer bestimmt wird, während der die Wärme- und Lösungsmittelflüsse in entgegengesetzten Richtungen fließen; und
(c) Entfernen der von dem Lösungsmittel freigelegten Teile der Elektrodenschicht, um das darunter liegende leitende Substrat freizulegen.

2. Verfahren nach Anspruch 1, wobei das Lösungsmittel von einem mit Lösungsmittel getränkten Docht oder Kissen oder durch Sprühen oder Walzen aufgebracht wird.

3. Verfahren nach den Ansprüchen 1 und 2, wobei das Lösungsmittel erwärmt wird.

4. Verfahren nach den Ansprüchen 1, 2 und 3, wobei ein Bereich der beschichteten Platte, das Lösungsmittel oder der mit Lösungsmittel getränkte Docht bzw. das Kissen auf eine Temperatur von ca. 100°C oder mehr erwärmt wird.

5. Verfahren nach den Ansprüchen 1 bis 4, wobei die Verweildauer von ca. 0,1 Sekunden bis ca. 5 Sekunden reicht.

6. Verfahren nach den Ansprüchen 1 bis 5, wobei der von dem Lösungsmittel freigelegte Teil der Elektrodenschicht durch mechanische Abrasion entfernt wird und die mechanische Abrasion Bürsten oder Schaben umfasst.

7. Verfahren nach den Ansprüchen 1 bis 6, das des Weiteren das Aufwickeln der beschichteten Platte auf eine Spule umfasst.

8. Verfahren nach den Ansprüchen 1 bis 7, das des Weiteren das Befestigen eines leitenden Streifens an dem freigelegten leitenden Substrat umfasst.

## Revendications

1. Procédé pour éliminer sélectivement des portions d'une feuille revêtue, le procédé comprenant :
(a) le chauffage d'une région d'une feuille revêtue, la feuille comprenant un substrat conducteur et une couche électrode ;
(b) l'application d'un solvant sur une ou plusieurs parties sélectionnées de la couche électrode dans une région de la feuille revêtue qui est chauffée, dans lequel du solvant est appliqué simultanément au chauffage, et un temps de maintien est établi durant lequel les flux de chaleur et de solvant s'écoulent dans des directions opposées ; et
(c) l'enlèvement des parties exposées au solvant de la couche électrode pour exposer le substrat conducteur sous-jacent.

2. Procédé selon la revendication 1, dans lequel le solvant est appliqué à partir d'une mèche ou d'un tampon saturé(e) de solvant, ou par pulvérisation ou roulage.

3. Procédé selon les revendications 1 et 2, dans lequel le solvant est chauffé.

4. Procédé selon les revendications 1, 2 et 3, dans lequel une région de la feuille revêtue, le solvant ou la mèche ou tampon saturé(e) de solvant est chauffé(e) à une température d'environ 100°C ou plus.

5. Procédé selon les revendications 1 à 4, dans lequel le temps de maintien est d'environ 0,1 seconde à environ 5 secondes.

6. Procédé selon les revendications 1 à 5, dans lequel la partie exposée au solvant de la couche électrode est enlevée par abrasion mécanique et l'abrasion mécanique comprend le brossage ou le raclage.

7. Procédé selon les revendications 1 à 6, comprenant en outre l'enroulement de la feuille revêtue sur une bobine.

8. Procédé selon les revendications 1 à 7, comprenant en outre la fixation d'une languette conductrice au substrat conducteur exposé.
